# EUROPEAN PATENT APPLICATION

(11) **EP 1 326 118 A2**
(43) Date of publication of application: **09.07.2003**
(21) Application number: 02028463.4
(22) Date of filing: 19.12.2002
(51) Int. Cl.: G02B 23/12

(54) **Wide angle display device using compact prism eyepieces**

(30) Priority: 21.12.2001 US 24136
(71) Applicant: ITT MANUFACTURING ENTERPRISES, INC., Wilmington, Delaware 19801 (US)
(72) Inventor: Janeczko, Donald J., Fincastle, VA 24090 (US); Dobbie, Blair R., Roanoke, VA 24012 (US)
(74) Representative: Esser, Wolfgang

(57) **Abstract**

A wide angle display device which may be incorporated into a night vision device, comprising a plurality of image sources which may be display screens, and a plurality of compact prism eyepieces which are positioned in relation to each other such that the images projected thereby at a viewing region are juxtaposed.

## Description

### FIELD OF THE INVENTION

The present invention is directed to wide angle displays, and particularly to such displays as may be incorporated in a night vision device.

### BACKGROUND OF THE INVENTION

A wide field of view is in general desirable in electronic display devices for numerous applications including by way of non-limitative example, computer graphics, video games, and aircraft simulators.

On the other hand, night vision devices are part of an art which has in the past been more associated with conventional optics than with electronic displays. It has long been recognized, though, that night vision devices also would benefit from a wide field of view for enabling the user to see a greater extent of the scene before him with amplified light. By way of background, night vision devices are typically used by the military or law enforcement personnel in low light conditions, and contain an image intensifier tube which amplifies visible and infrared components of light for enabling such personnel to see better in the low light. Clearly, the greater the field of view which the user can see before him at one time, the more effective the night vision device will be.

In the prior art, panoramic night vision goggles are provided which use additional optical channels to provide a wider field of view. For example, U.S. Patent No. 6,075,644 uses four image intensifier channels to look at three separate fields of view, each of which is offset about thirty degrees horizontally. Each image produced by the four channels is physically displaced in space, and the device looks at the four channels simultaneously with a complex optical eyepiece. This complex eyepiece actually consists of four individual eyepieces (each using multiple lenses), complex folded prisms, folded mirrors and beam splitters to make the three images appear to be side by side as viewed by the human eye.

A problem with the prior art approach is the use of a large number of optical components in the complex eyepiece. This is uneconomical, and additionally, exacts a weight and volume penalty. Inasmuch as the night vision goggle may be supported by the head or neck of the user, it is important to keep it as light as possible. Also, since the device may be cantilevered from a head mount assembly carried on the head of the user, it is desirable for it not to have a long forward projection. The optical folds in the prior art device make it difficult to minimize forward projection, and direct view as well is difficult to attain.

An article entitled "Optical Tiling for Wide Field of View Head-Mounted Displays" SPIE Vol. 3779, pp. 146 to 153, discloses a wide angle display device, for example for use in an aircraft simulator, which is comprised of a number of small, high resolution displays having imaging lenses which are tiled together. This prior art configuration suffers from some of the same problems as the device in U.S. Patent No. 6,075,644.

In U.S. Patent No. 5,701,202 a compact prism eyepiece is disclosed which uses internal reflections from prism surfaces to project light from an image source to a viewing region where the eye of an observer would be located. The compact prism may be made of optical plastic and can be very light. Also, it can be located immediately in front of a view's eye in the position of an eyeglass lens and has a minimal forward projection.

### BRIEF SUMMARY OF THE INVENTION

In accordance with an aspect of the present invention, a wide angle display device is provided which is comprised of a plurality of image sources and a plurality of compact prism eyepieces, each of which is situated so that it receives image information from a respective image source, wherein the compact prism eyepieces are positioned in relation to each other such that the images projected thereby at a viewing region are juxtaposed.

In accordance with a further aspect of the invention, a night vision device having a wide field of view is provided which is comprised of a plurality of video displays, a plurality of image intensified video cameras and a plurality of compact prism eyepieces each of which is situated so it receives image information from a respective video display, wherein the compact prism eyepieces are positioned in relation to each other such that images projected thereby at a viewing region are juxtaposed.

### BRIEF DESCRIPTION OF THE DRAWINGS

Figures1 to 3 show prior art panoramic night vision goggles.
Figure 4 shows a prior art compact prism eyepiece.
Figure 5 shows a video display incorporating a compact prism eyepiece.
Figure 6 shows a prior art coaxial type eyepiece.
Figure 7 shows an embodiment of the invention.
Figure 8 shows two juxtaposed images, where the images are different parts of the same overall pattern.
Figure 9 shows a further embodiment of the invention.
Figure 10 is a different view of the Figure 9 embodiment, which shows the orientation of the display screens.
Figure 11 shows a still further embodiment of the invention, which uses three compact prisms.
Figure 12 shows an embodiment of a night vision device in accordance with the invention.

### DETAILED DESCRIPTION OF PREFERRED EMBODIMENTS

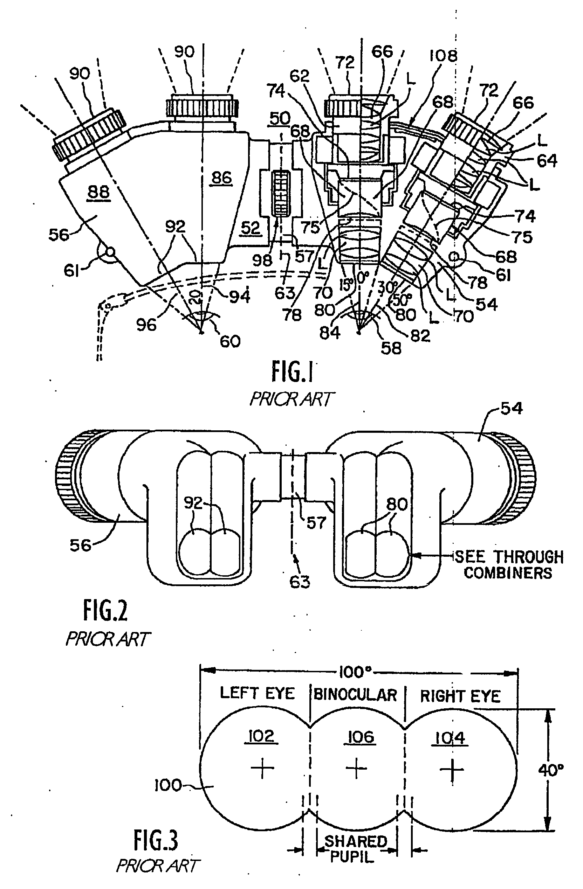

Figures 1 to 3 depict the prior art panoramic night vision goggles disclosed in U.S. Patent No. 6,075,644, which is mentioned above. Referring to Figures 1 and 2, it is seen that the goggles are comprised of a pair of housings 54 and 56 which are connected by a bridge 57, wherein each housing is for covering a respective eye of an observer. Housing 54 (housing 56 is similar) includes two separate optical channels 62 and 64, having an identical structure. Optical channel 62 includes three main structures, which are an objective optical system 66, an image intensifier tube 68, and an eyepiece optical train 70. To illustrate the complexity, the objective optical system includes approximately two to seven optical elements, while the eyepiece optical train also includes approximately two to seven optical elements. Optical channels 62 and 64 are offset by 30° from each other.

The overall device thus comprises four optical channels looking at three fields of view, wherein each optical channel includes a large number of optical elements and the optical system is folded (Figure 2). The field of view of the four channels is shown schematically in Figure 3, and is seen to comprise a binocular portion 106 sandwiched between two monocular portions 102 and 104, with the overall field measuring 100° horizontally by 40° vertically.

As previously mentioned, the prior art night vision device depicted in Figures 1 to 3 has significant disadvantages, including its relatively large weight and volume and the long forward projection caused by the multiplicity of optical components of which it is comprised.

In distinction to the prior art, in the preferred embodiment the present invention utilizes video displays and compact prism eyepieces to achieve a panoramic display. In a compact prism eyepiece, interactions of light with prism surfaces are utilized, with the curvatures of the surfaces producing the requisite optical powers to make the image appear at infinity. The term compact prism eyepiece as used herein means each and every embodiment of such eyepieces disclosed in U.S. Patent No. 5,701,202, the entire disclosure of which is incorporated herein by reference.

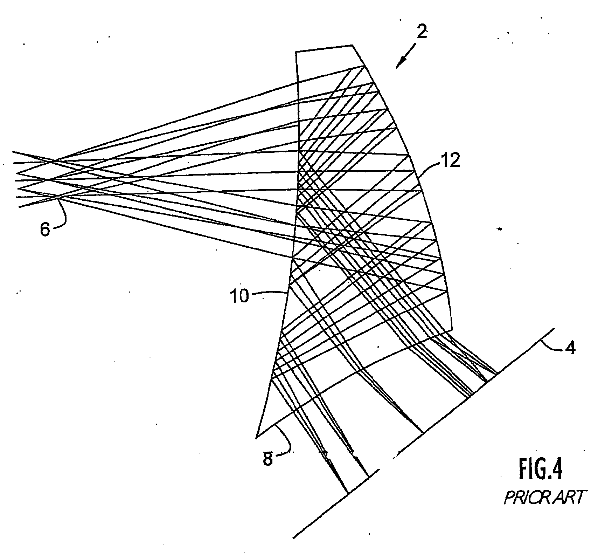

Figure 4 depicts an embodiment of a compact prism eyepiece 2 disclosed in U.S. Patent No. 5,701,202. Advantages of such eyepieces are their small size, and the fact that they are comprised of only a single optical element. Also, they may be constructed of optical plastic, which has only 1 /2 to 1/4 the density of the optical glass typically used in coaxial eyepieces. When this is combined with the fact that only a single prism element is used, the savings in weight and volume are significant.

In addition to compact prism eyepiece 2, Figure 4 shows image source 4, for example a video display, and viewing region 6. The eyepiece 2 includes an entrance surface 8, a surface 10 which serves as both a reflecting surface and an exit surface, and a surface 12 which serves as a reflecting surface.

In the operation of the device, a bundle of light rays emitted from the image source 4 is refracted by entrance surface 8 and is internally reflected by surface 10 and then again internally reflected by surface 12. The ray bundle is then incident on the surface 10 again, and is refracted thereby so as to be projected to viewing region 6 where the observer's eye is located.

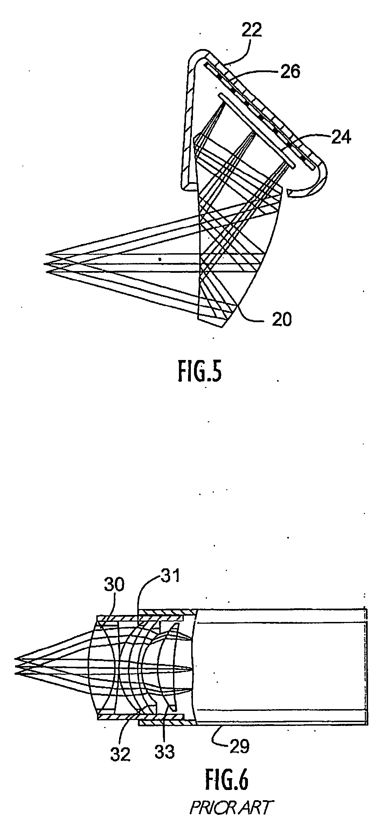

Figure 5 shows a compact prism eyepiece 20 situated in a display housing 22. A flat panel video display 24 is also located in the housing as well as a display printed circuit board 26. The unit could be suspended from a headmount assembly so that the compact prism eyepiece would be slightly forward of a user's eye in about the position of an eyeglass lens, and the entire unit could have a minimal forward projection of only about 2,5 cm (one inch).

This is to be contrasted with a prior art coaxial type eyepiece 28 shown in Figure 6. In this Figure, the eyepiece barrel 29 is broken away to show a few of the lens train components 30, 31, 32 and 33. The prior art eyepiece, as discussed above is much bulkier and heavier, and typically would have a forward projection of about 7,5 cm (3 inches) from the eye.

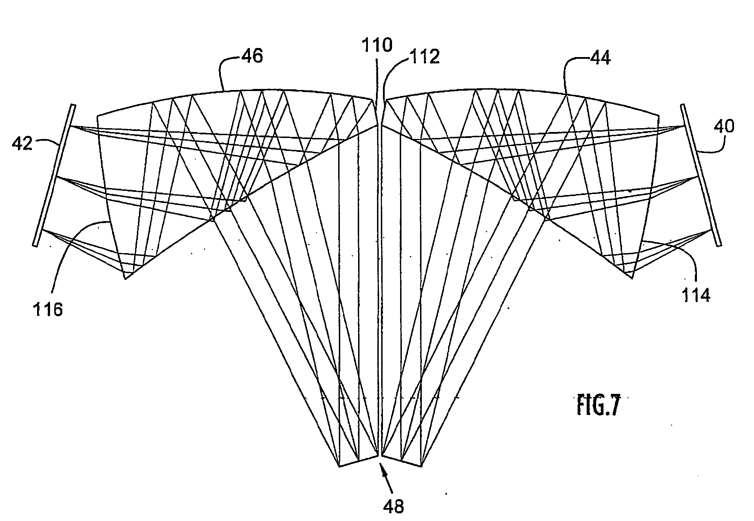

An embodiment of the present invention is depicted in Figure 7. It is comprised of two image sources 40 and 42, two compact prism eyepieces 44 and 46, and a viewing region 48. The image sources 40 and 42 may be video displays, for example, microdisplays of small dimension.

The compact prism eyepieces receive image information from the image sources, and the compact prism eyepieces are positioned in relation to each other such that the images which are projected thereby are juxtaposed at viewing region 48. The eyepieces 44 and 46 are adjacent each other along surfaces 110 and 112, and may abut each other, e.g. at the bottom of such surfaces as shown in Figure 7. The image sources 40 and 42 are angled with respect to prism entrance surfaces 114 and 116 so that an appropriate ray projection is achieved.

In an actual embodiment, an observer's eye would be situated at viewing region 48. The device could be stationary or portable. If portable, such as in a video enhanced night vision device, the compact prisms (and video displays) could be suspended from an observer's head with the compact prisms in about the position of an eyeglass lens.

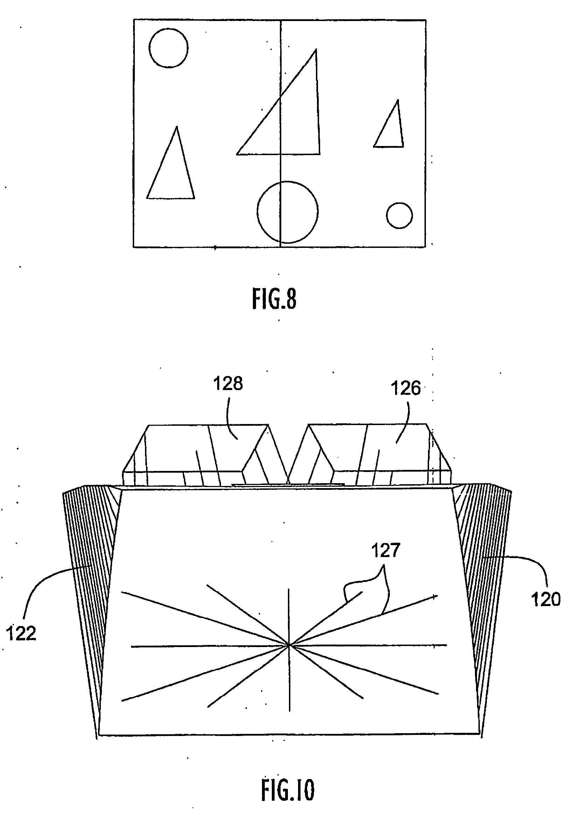

In some embodiments, the image information from the image sources is intended to be juxtaposed by its content, for example when a panoramic view of a single scene is desired. In other embodiments, a juxtaposition may be created to achieve a certain effect, e.g. a first image may be of a scene, while a second image juxtaposed with the first may be data or explanatory information relevant to the scene. Figure 8 shows what two juxtaposed images may look like when the images are respective parts of the same scene or pattern.

Figure 9 shows a further embodiment of the invention wherein the compact prism eyepieces 120 and 122 are oriented vertically rather than horizontally. The same effect as in Figure 7 is achieved, wherein the images projected by the respective prisms from displays 126 and 128 are juxtaposed at viewing region 124. In the particular embodiment shown, the prisms abut each other along a vertically extending seam beginning at the top in Figure 9 at reference numeral 129. The prisms abut only along a vertically extending line. The prisms may be shaped to cause a greater degree of abutment and/or to cause other edges to abut. In a portable embodiment, such as when part of a video night vision device, the eyepieces could be suspended in front of a viewer's eye.

Referring to Figure 7 and 9, it is seen that the video displays are physically smaller than the prisms, i.e. the cross-sectional area of display surface 65 is smaller than the cross-sectional area of prism entrance surface 66. Since the prisms are larger than the displays it is possible to trim the prisms at angles (both horizontally and vertically) so that the sides of a prism can abut the next prism without causing the video displays to collide or interfere with each other in any way.

Figure 10 shows a view of the Figure 9 embodiment looking at the prism faces which abut each other at seam 129. The orientation of displays 126 and 128, as well as converging rays 127 as projected on a single plane, are shown.

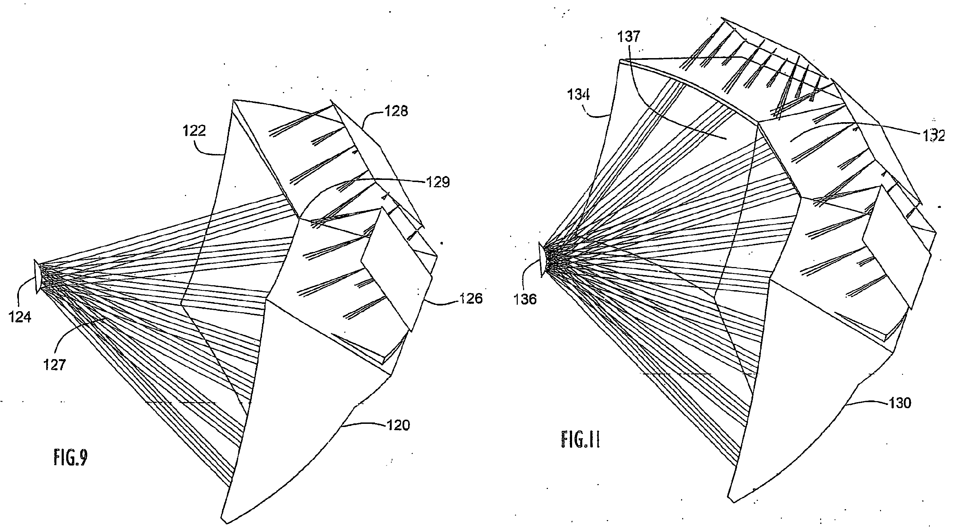

Figure 11 shows a further embodiment of the invention wherein three compact prism eyepieces 130, 132 and 134 are tiled together to achieve an even wider field of view at viewing region 136, than in the embodiment of Figure 9. Vertically extending seam 137 is present. It is thus seen that the compact prism eyepieces afford flexibility in how they can be tiled together by cutting along different surfaces to achieve fields of view of varying dimensions and shapes.

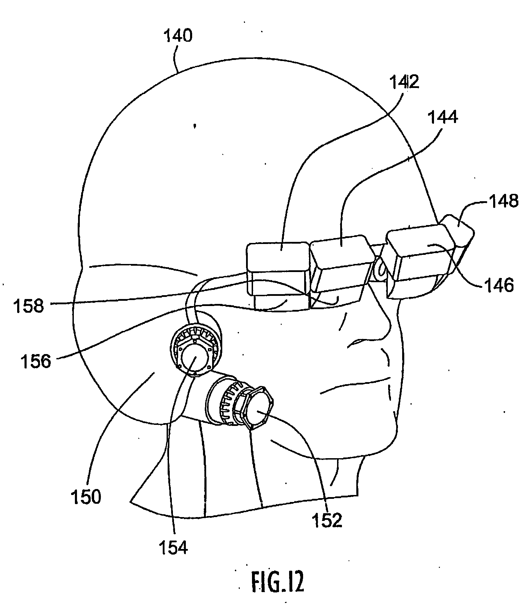

Figure 12 shows an embodiment of night vision goggles in accordance with the invention. The viewer wears a head mount such as helmet 140, to which the various components are secured. In lieu of a helmet, a head mount assembly comprised of a mounting platform and head and neck straps may be used.

The embodiment shown utilizes two image intensified video cameras 152 and 154 for the right eye, which respectively feed video signals by an electrical connection to video display units 144 and 142. Each video camera includes an image intensifier tube for amplifying low level visible and infrared light. Each of the display units 142 and 144 is similar to the display unit depicted in Figure 5. Display unit 142 contains a display and compact prism eyepiece 156, while display unit 154 contains a display and compact prism eyepiece 158. The displays and compact prism eyepieces are in the configuration shown in Figure 9, for providing a wide angle view to the right eye. As can be seen, the video cameras 152 and 154 are oriented to be at an angle to each other, so as to cover a panoramic field of view.

The video cameras may be mounted to helmet portion 150, which extends below the right ear while the displays would be suspended in front of the viewers eye(s), at or slightly ahead of where an eyeglass lens would be.

In the embodiment shown, display units 146 and 148 are suspended in front of the left eye. These would be fed by a pair of image intensified video cameras adjacent the left cheek (not shown). A night vision goggle may utilize displays in front of one or both eyes, and the number of displays in front of each eye may be at least two. The night vision device may be battery powered, and may incorporate image processing. It is advantageous in comparison to prior art panoramic night vision devices (e.g., Figures 1 to 3), in that it has a much shorter profile, is lower in weight and volume, and enables the viewer a greater amount of mobility. It also may be interfaced with other electronic equipment to provide the viewer more information than direct view goggles.

There thus has been disclosed an improved wide angle display device and panoramic video enhanced night vision goggle. While preferred and illustrative embodiments of the invention have been disclosed, it should be understood that variations will occur to those skilled in the art. Thus the invention to be covered is set forth in the following claims.

## Claims

1. A wide angle display device, comprising:
a plurality of image sources (42, 44); and
a plurality of compact prism eyepieces (20, 44, 46), each of which is situated so that it receives image information from a respective image source;
wherein the compact prism eyepieces are positioned in relation to each other such that the images projected thereby at a viewing region (48) are juxtaposed.

2. The display device of claim 1 wherein the compact prism eyepieces are adjacent each other (110, 112) and wherein each image source comprises a video display (24, 142, 144).

3. The display device of claim 1 or 2 wherein each video display (24) is physically smaller than the compact prism eyepiece (20) which it provides image information.

4. A wide angle display device, comprising:
a plurality of image sources(40, 42); and
compact prism eyepiece means (20, 44, 46) for receiving image information from the plurality of image sources and
projecting a composite image at a viewing region (48) in which image information from the plurality of image sources is juxtaposed.

5. The display device of claim at least one of claims 1 to 4 wherein each image source comprises the combination of an image intensified video camera (152, 154) and a video display (142, 144).

6. The display device of at least one of claims 1 to 5 wherein each compact prism eyepiece (20, 44, 46) includes an entrance surface having a first surface area (114, 116) and wherein each video display (20, 40, 42) which provides image information to a respective compact prism eyepiece has a second surface area, said second surface area being smaller than said first surface area.

7. A night vision device having a wide field of view, comprising:
a plurality of video displays (40, 42, 142, 144);
a plurality of image intensified video cameras (156, 158), wherein each video camera provides image information to a respective video display; and
a plurality of compact prism eyepieces (20, 156, 158), each of which is situated so that it receives image information from a respective video display;
wherein the compact prism eyepieces are positioned in relation to each other such that the images projected thereby at a viewing region are juxtaposed.

8. The night vision device of claim 7 wherein each video camera (156, 158) is physically separated from the video display (142, 144) to which it provides image information.

9. The night vision device of claim 7 or 8 wherein the compact prism eyepieces are adjacent to each other and abut each other; and
the respective video cameras provide image information to the video displays which is intended to be juxtaposed when viewed; and
the respective video cameras are oriented so as to provide image information to the video displays which is representative of different parts of the same overall scene.

10. The night vision device of at least one of claims 1 to 5 wherein each compact prism eyepiece includes an entrance surface (114, 116) having a first surface area and wherein each video display (40, 42) which provides image information to a respective compact prism eyepiece has a second surface area, said second surface area being smaller than said first surface area.
